# EUROPEAN PATENT SPECIFICATION

(11) **EP 3 502 530 B1**
(45) Date of publication and mention of the grant of the patent: **23.09.2020**
(21) Application number: 18212698.7
(22) Date of filing: 14.12.2018
(51) Int. Cl.: B67D 7/02, F16K 1/44, F16K 15/02, F16K 27/02

(54) **SUCTION VALVE**
SAUGVENTIL
SOUPAPE D'ASPIRATION

(30) Priority: 21.12.2017 EP 17209757
(43) Date of publication of application: 26.06.2019
(73) Proprietor: Tetra Laval Holdings & Finance S.A., 1009 Pully (CH)
(72) Inventor: EGGLER, Thomas, CH 4852 Rothrist (CH); STEFFEN, Denis, 5722 Gränichen (CH)
(74) Representative: Tetra Pak - Patent Attorneys SE

(56) References cited:
- EP-A1- 1 711 731
- WO-A1-2017/027963
- DE-C- 849 206
- FR-A1- 2 659 412
- JP-A- H 045 935
- US-A- 620 936
- US-A- 982 680
- US-A- 1 751 371
- US-A- 4 766 930
- US-A1- 2012 008 882
- US-A1- 2017 328 316

## Description

### TECHNICAL FIELD

The invention relates to a suction valve configured to be attached to a conduit that is arranged to provide a suction force for sucking liquid from a vessel.

### BACKGROUND

Industrial scale food handling often involves the use of large vessels, such as tanks, that contain more or less liquid foodstuff. When such a vessel containing a liquid is to be emptied it is often important to minimize the amount of liquid that remains in the vessel after being emptied, i.e. it is typically desired to completely empty the vessel.

Arrangements used for emptying vessels of liquid include conduits, such as a simple hose or tube, equipped with a nozzle comprising a suction valve through which liquid may be sucked out of the vessel. There are a multitude of nozzles having suction valves in the prior art, most of which have drawbacks such as the inability to enable suction of liquid at the very bottom of the vessel at a point in time when the vessel is almost empty.

WO2017027963 discloses an anti-drain valve for a plate cooler comprising a housing having a cylindrical outer wall with open ends, and an inner support structure integrally formed therewith, and with a valve seat. A piston is located within the support structure and axially movable toward and away from the valve seat. A biasing member biases the piston toward the valve seat. A resilient sealing element provides a seal between the housing and the base plate. The outer wall comprises first and second portions, the first portion including a plurality of inwardly bendable detents defined by slots through the outer wall for attaching the valve to the base plate of the plate cooler.

US4766930 discloses a fluid-delivery check valve, in which the body and a sleeve threaded thereon define a chamber with inlet and outlet ports therein. A plate shutter interacts with the valve seat and has peripherically thereof guiding wings which are positioned parallel to the axis of the shutter and slide on the inner surface of the chamber. The specific design of the shutter prevents oblique positioning of the valve stem and simplify the structure and operation of the valve.

US20120008882 discloses a fluid handling system including a valve assembly within a needle that is movable from a closed state to an open state against a bias while engaging and moving a valve stem of a fluid supply from a closed state to an open state.

EP1711731 discloses a check valve including a valve housing having a first housing portion including an inlet and a second housing portion having an outlet. A poppet valve is received in the housing and includes an outer surface having a diameter greater than the diameters of the inlet and outlet. A valve guide is also received in the valve housing and defines a variable volume pressure cavity and a fluid flow path. The valve guide is adapted to provide the variable volume pressure cavity in communication with the fluid flow path. A resiliently compressible member is adapted to bias the poppet valve toward a closed position against a flow of fluid through the check valve and a low pressure force created in the variable volume pressure cavity by virtue of the fluid flow through the valve guide.

DE849206 discloses an overpressure valve having a casing, an inflow space, a piston and a spring. That has the simple construction, the noise-free operation, the vibration-free operation and the throttle-free flow of the fluid.

US1751371 discloses a valve for attachment to the lower end of a suction pipe which extends from adjacent to the bottom of the tank.

US20170328316 discloses a multi-chamber blowoff valve provided for releasing excess air pressure from a duct system associated with a vehicle. The blowoff valve has a valve housing, an engine-air interface, and a multiple piston assembly. The valve housing is configured to secure to the duct system at a duct-air interface. The engine-air interface is configured to allow air in and out of the valve housing. The multiple piston assembly is disposed within the valve housing and includes an upper piston and a lower piston that move in unison. The multiple piston assembly is configured to be in a closed position while a pressure differential is above a certain threshold and to be in an open position while the pressure differential is below said certain threshold. While in the open position, a portion of the air in the duct system is released.

### SUMMARY

In view of the above, an object of the present disclosure is to overcome or at least mitigate at least some of the drawbacks related to prior art suction valves.

This is achieved in a first aspect by a suction valve that is configured to be attached to a conduit, which is arranged to provide a suction force for sucking liquid from a vessel. The suction valve comprises an outer body comprising a suction inlet and configured to be connected to the conduit and an inner body being movably arranged within the outer body. The outer body and the inner body are concentrically arranged in relation to each other around a longitudinal axis. The inner body is arranged to move in the directions (-Y, Y) along the longitudinal axis. A spring is arranged to exert a force on the inner body to press the inner body in a direction towards the suction inlet such that the inner body seals the suction inlet to thereby set the suction valve in a closed state. The inner body is arranged to move in a direction away from the suction inlet when a suction force applied by the conduit is larger than the force exerted by the spring to thereby set the suction valve in an open state to allow liquid to be sucked from the vessel through the suction inlet and into the conduit. The suction inlet of the outer body comprises an end suction inlet and a lateral suction inlet. The inner body comprises an end sealing surface, a lateral sealing surface and a liquid passage for allowing liquid to flow through the inner body. In the closed state (P1), the inner body is in a first position along the longitudinal axis, in which first position the end sealing surface seals the end suction inlet while the lateral sealing surface seals the lateral suction inlet. The inner body is arranged to move in a direction (Y) away from the end suction inlet when an external force that is applied on the inner body, by pressing of the suction valve towards the vessel, is larger than the force exerted by the spring, to thereby set the suction valve in an intermediate state (P22) to allow liquid to be sucked from the vessel, through the end suction inlet and into the conduit. In the intermediate state (P22), the inner body is in a third position along the longitudinal axis, in which third position the end sealing surface is retracted from the end suction inlet and the lateral sealing surface seals the lateral suction inlet.

In other words, such a suction valve is advantageous in that it enables suction of liquid at the very bottom of the vessel at a point in time when the vessel is almost empty.

In a second aspect there is provided a suction system for sucking liquid from a vessel. Such a suction system comprises a suction valve as summarized above, a conduit to which the suction valve is attached and a suction device connected to the conduit to provide a suction force for sucking liquid from the vessel.

Exemplary a method of using a system as summarized above for sucking liquid from a vessel is provided. Such a method comprises lowering the suction valve into the liquid and applying suction by the suction device to place the suction valve in the open state and thereby remove liquid from the vessel by drawing the liquid into an end suction inlet and a lateral suction inlet of the outer body.

The second aspect and the described method provide effects and advantages corresponding to the effects and advantages of the first aspect.

### BRIEF DESCRIPTION OF THE DRAWINGS

Figure 1a is a cross-sectional side view of a suction valve in a closed state,
figure 1b is a cross-sectional side view of the suction valve of figure 1a in an open state,
figure 1c is a cross-sectional top view of the suction valve of figures 1a and 1b,
figure 1d is a cross-sectional perspective view of the suction valve of figures 1a-c,
figure 1e is a partial, cross-sectional side view of the suction valve of figures 1a and 1b in an intermediate state,
figure 2a is a cross-sectional side view of a suction valve according to a second embodiment and in a closed state,
figure 2b is a cross-sectional side view of the suction valve of figure 2a in an open state,
figure 2c is a cross-sectional top view of the suction valve of figures 2a and 2b, and
figure 2d is a cross-sectional perspective view of the suction valve of figures 2a-c,
figure 3 schematically illustrates a system comprising a suction valve, and
figure 4 is a flowchart of a method of using a system comprising a suction valve.

### DETAILED DESCRIPTION

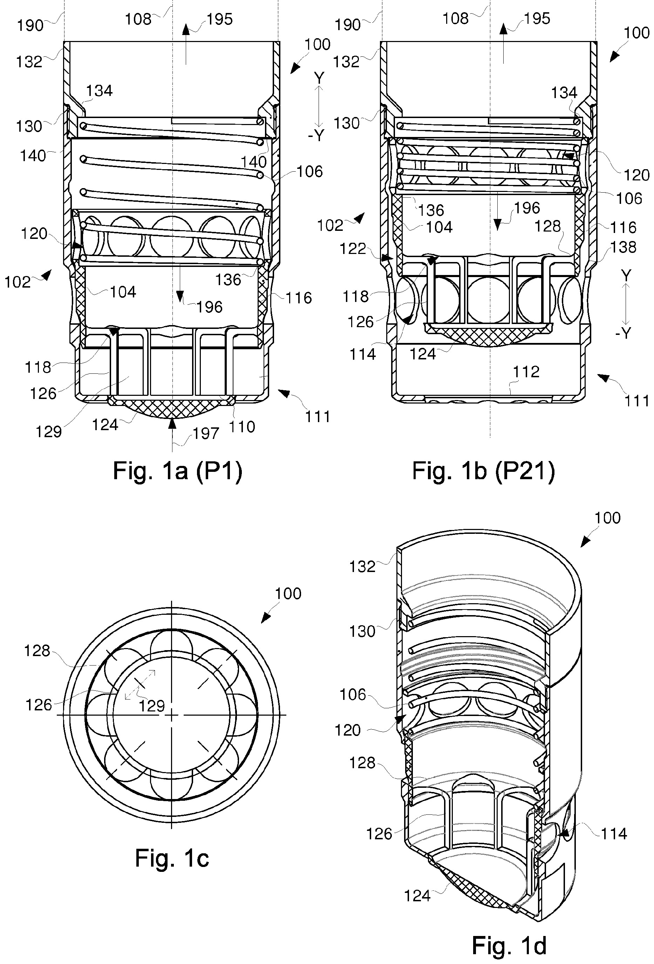

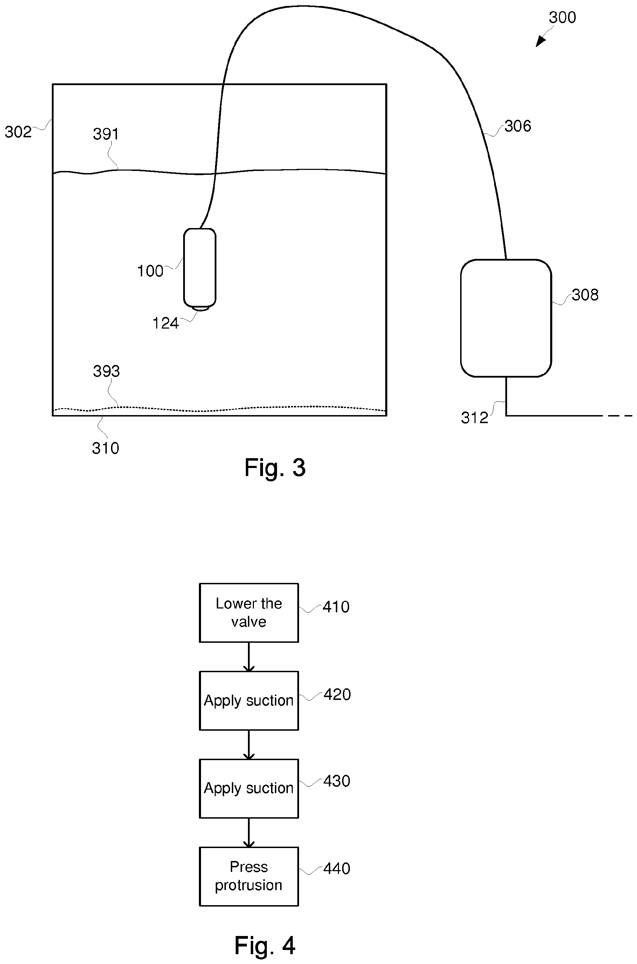

Referring first to **figures 1a****-e**, and with reference also to figure 3, a suction valve 100 is attached to a conduit 190 that is arranged to provide a suction force for sucking liquid 391 from a vessel 302. The liquid 391 may be liquid food.

The suction valve 100 comprises an outer body 102 comprising, in one end of the suction valve 100, a suction inlet 111 and configured to be connected to the conduit 190 (the conduit also referred to with reference numeral 306 in figure 3) at another end of the suction valve 100.

An inner body 104 is movably arranged within the outer body 102.

The outer body 102 and the inner body 104 are concentrically arranged in relation to each other around a longitudinal axis 108. The inner body 104 is then arranged to move in directions -Y, Y along the longitudinal axis 108. As exemplified, the suction valve 100 is generally circularly symmetric with respect to the longitudinal axis 108. However, other symmetries may be foreseen in other embodiments, such as any polygon-shaped cross-section.

A spring 106 arranged to exert a force 196 on the inner body 104 to press the inner body 104 in a direction -Y towards the suction inlet 111, such that the inner body 104 seals the suction inlet 111 to thereby set the suction valve 100 in a closed state P1.

The inner body 104 is arranged to move in a direction Y away from the suction inlet 111 when a suction force 195 applied by the conduit 190 is larger than the force 196 exerted by the spring 106, to thereby set the suction valve 100 in an open state P21 to allow liquid 391 to be sucked from the vessel 302, through the suction inlet 111 and into the conduit 190.

The suction inlet 111 of the outer body 102 has an end suction inlet 112 and a lateral suction inlet 114. The inner body 104 has an end sealing surface 110, a lateral sealing surface 116 and a liquid passage 118 for allowing liquid to flow through the inner body 104. In the closed state P1, the inner body 104 is in a first position along the longitudinal axis 108, in which first position the end sealing surface 110 seals the end suction inlet 112 while the lateral sealing surface 116 seals the lateral suction inlet 114. As exemplified, the lateral inlet 114 is in the form of a plurality of circular holes distributed around the circumference of the outer body 102. However, the lateral inlet 114 may be comprised of any appropriate number of holes having any appropriate shape and distribution on the outer body 102.

In the open state P21, the inner body 104 is in a second position along the longitudinal axis 108, in which second position the end sealing surface 110 is retracted from the end suction inlet 112 and the lateral sealing surface 116 is retracted from the lateral suction inlet 114.

The inner body 104 is arranged to move in the direction Y away from the end suction inlet 111 when an external force 197 that is applied on the inner body 104 is larger than the force exerted by the spring 106. The external force 197 can be applied by pressing of the suction valve 100 towards a bottom of the vessel 302. Thereby the suction valve 100 can be set in an intermediate state P22 to allow liquid 391 to be sucked from the vessel 302 through the end suction inlet 112 and into the conduit 190.

In the intermediate state P22, the inner body 104 is in a third position along the longitudinal axis 108. In the third position, the end sealing surface 110 is retracted from the end suction inlet 112 while the lateral sealing surface 116 still seals the lateral suction inlet 114.

The inner body 104 has a lateral inlet 120 that is located above the liquid passage 118 of the inner body 104. When the suction valve 100 is set in the open state P21, a circumferential channel 122 leading to the lateral inlet 120 of the inner body 104 is formed between the outer body 102 and the inner body 104. The circumferential channel 122 thereby allows liquid 191 to flow through the lateral inlet 120 of the inner body 104 and into the conduit 190. This circumferential channel 122 may then improve cleaning of the suction valve 100, when cleaning liquid is sucked through the suction valve 100. The lateral inlet 120 is in the form of a plurality of circular holes distributed around the circumference of the inner body 104. However, the lateral inlet 120 may be comprised of any appropriate number of holes having any appropriate shape and distribution on the inner body 104.

The inner body 104 has a protrusion 124 that protrudes, when the suction valve 100 is in the closed state P1, beyond the end suction inlet 112 of the outer body 102. As illustrated in figures 1a-e, the protrusion 124 may have a convex shape. However, other embodiments may comprise protrusions having other shapes, for example protrusions having the shape of truncated cones.

Such a protrusion 124 may be arranged on the end sealing surface 110, the end sealing surface 110 being supported by legs 126 that protrudes from a cylindrically shaped section 128 of the inner body 104, 204. The liquid passage 118 of the inner body 104, 204 is formed by spacings 129 between the legs 126. Whereas the suction valve 100 is exemplified having eight equidistant legs 129, it is to be noted that the some embodiments may comprise any other number of legs having any appropriate length and distribution along the circumference of the cylindrically shaped section 128.

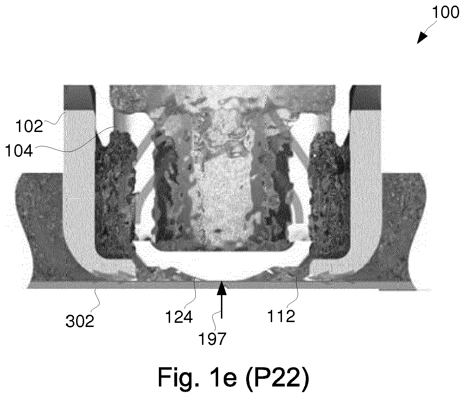

When the suction valve 100 is in the intermediate state P22 (see Fig. 1e), the lateral inlet 114 of the outer body 102 is sealed while the end inlet 112 of the outer body 102 is open. This intermediate state P21 is advantageous in that it enables an effective suction of liquid from the vessel 302 at a point in time when the vessel 302 is almost empty, as indicated by a low liquid level 393 in figure 3. When the liquid in the vessel 302 is at the low liquid level 393, then the lateral inlet 114 may be located above the low liquid level 393. However, by the fact that the lateral inlet 114 is sealed by the lateral sealing surface 116, drawbacks related to sucking the atmosphere above the low liquid level 393 are avoided. As the skilled person will realize, it is in most food product contexts disadvantageous to suck a mixture of liquid and, e.g., air via the conduit 190. At the same time, the suction valve 100 has a high suction capacity when it is in the open state P21, since liquid then can be sucked through both the end suction inlet 112 and the lateral suction inlet 114.

The outer body 102 may comprises a first part 130 and a second part 132 that are attached to each other to hold the inner body 104. The second part 132 may comprise a first spring abutment surface 134 that faces the inner body 104 and the inner body 104 may comprise a second spring abutment surface 136 that faces the second part 132. The spring 106 is then in contact with and biased between the first and the second spring abutment surfaces 134, 136. Further, the first part 130 may comprise a first stop surface 138 against which the inner body 104 abut when the suction valve 100 is in the closed state P1 and the second part 132 may comprise a second stop surface 140 against which the inner body 104 abut when the suction valve 100 is in the open state P21. As can be seen in figures 1a-b, the first stop surface 138 ensures a tight fit between the outer body 102 and the inner body 104 and thereby a secure sealing of the lateral inlet 114 of the outer body 102. Moreover, the second stop surface 140 provides a limit on how far the inner body 1034 may move in the Y-direction.

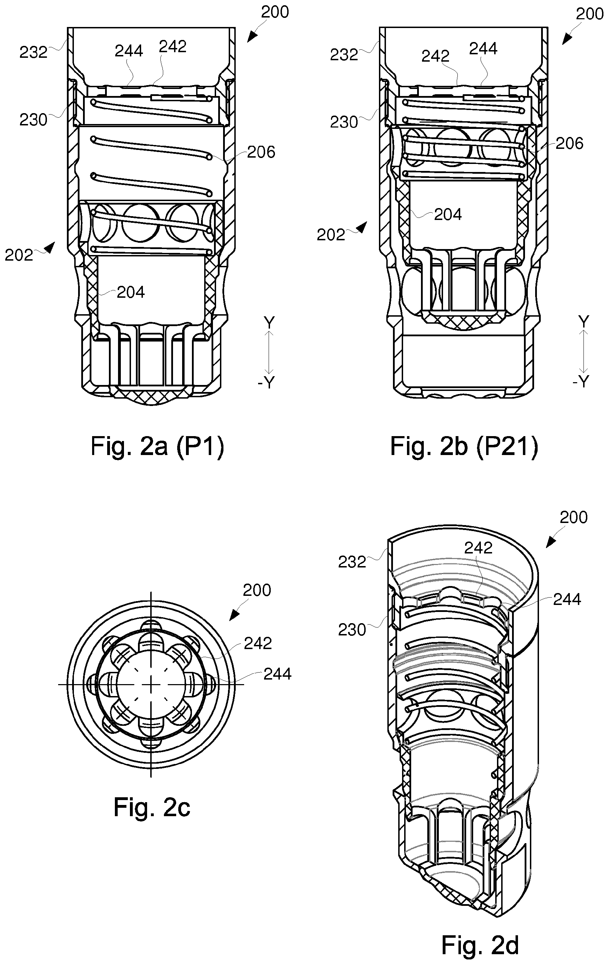

**Figures 2a****-d** illustrate a suction valve 200 that is similar to the suction valve 100 illustrated in figures 1a-d. The suction valve 200 of figures 2a-d illustrates more compact embodiments that the embodiments illustrated in figures 1a-e. In figures 2a and 2d, the suction valve 200 is in the closed state P1 and in figure 2b it is in the open state P21. The suction valve 200 comprises an outer body 202 and an inner body 204 and a spring 206. Similar to the suction valve 100, the outer body 202 comprises a first part 230 and a second part 232 that are attached to each other to hold the inner body 204. The second part 232 is configured, similar to the second part 132 of the suction valve 100, to be connected to a (not shown in figures 2a-d) conduit that is arranged to provide a suction force for sucking liquid from a vessel.

In addition to features that correspond to features of the suction valve 100, the second part 232 of the suction valve 200 has a cylindrically shaped section 242 having cut-outs 244. The cylindrically shaped section 242 is configured such that it operates as a spring abutment surface that is similar to the spring abutment surface 134 of the second part 132 of the suction valve 100 in figures 1a-e. The cut-outs 244 maximize the internal cross-section of the outer body 232 while retaining the spring abutment capability of the cylindrically shaped section 242. Consequently, the cut-outs 244 maximize the flow of liquid when the suction valve 200 is in the open state P21 when liquid is being sucked through the suction valve 200.

Turning now to **figure 3**, a suction system 300 for sucking liquid 391 from a vessel 302 is schematically illustrated. The suction system 300 comprises a suction valve such as the suction valve 100 of figures 1a-e (or the suction valve 200 of figures 2a-d). The suction system 300 further comprises a conduit 306 to which the suction valve 100 is attached. A suction device 308, e.g. an appropriately configured suction pump, is connected to the conduit 306 to provide a suction force for sucking liquid 391 from the vessel 302. The suction device 308 connects to further arrangements via a further conduit 312, the details of which are outside the scope of the present disclosure.

Turning now to **figure 4**, and with continued reference to figures 1a-e and figure 3, a method of using the system 300 for sucking liquid 391 from a vessel 302 comprises a number of actions that begin with a lowering 410 of the suction valve 100 into the liquid 391. Suction is then applied 420 by the suction device 308 to place the suction valve in the open state P21 and thereby remove liquid 391 from the vessel 302 by drawing the liquid into the end suction inlet 112 and the lateral suction inlet 114 of the outer body 102, 202.

A further action of applying suction 430 by the suction device 308 may then be performed. In this application of suction 430, a suction force is applied that is smaller than the force exerted by the spring 106. The suction valve 100 is thereby placed in the closed state P1. By pressing 440 the protrusion 124 of the inner body 104 towards a bottom part 310 of the vessel 302, the suction valve 100 is then placed in the intermediate state P22 to thereby remove liquid 391 from the vessel 302 by drawing the liquid into the end suction inlet 112 while the lateral suction inlet 114 is closed. That is, liquid 393 at the bottom 310 of the vessel 302 is being sucked, providing the advantages as described above.

From the description above follows that, although various embodiments of the invention have been described and shown, the invention is not restricted thereto, but may also be embodied in other ways within the scope of the subject-matter defined in the following claims.

## Claims

1. A suction valve (100, 200) configured to be attached to a conduit (190) that is arranged to provide a suction force for sucking liquid (391) from a vessel (302), the suction valve (100, 200) comprising
- an outer body (102, 202) comprising a suction inlet (111) and configured to be connected to the conduit (190), and
- an inner body (104, 204) movably arranged within the outer body (102, 202),
wherein
- the outer body (102, 202) and the inner body (104, 204) are concentrically arranged in relation to each other around a longitudinal axis (108),
- the inner body is arranged to move in the directions (-Y, Y) along the longitudinal axis (108),
- a spring (106, 206) arranged to exert a force on the inner body (104, 204) to press the inner body (104, 204) in a direction (-Y) towards the suction inlet (111), such that the inner body (104, 204) seals the suction inlet (111) to thereby set the suction valve (100, 200) in a closed state (P1),
- the inner body (104, 204) is arranged to move in a direction (Y) away from the suction inlet (111) when a suction force (195) applied by the conduit (190) is larger than the force exerted by the spring (106), to thereby set the suction valve (100, 200) in an open state (P21) to allow liquid (391) to be sucked from the vessel (302), through the suction inlet (111) and into the conduit (190)
- the suction inlet (111) of the outer body (102, 202) comprises an end suction inlet (112) and a lateral suction inlet (114),
- the inner body (104, 204) comprises an end sealing surface (110), a lateral sealing surface (116) and a liquid passage (118) for allowing liquid to flow through the inner body (104, 204),
- in the closed state (P1), the inner body (104, 204) is in a first position along the longitudinal axis (108), in which first position the end sealing surface (110) seals the end suction inlet (112) while the lateral sealing surface (116) seals the lateral suction inlet (114),
- the inner body (104, 204) is arranged to move in a direction (Y) away from the end suction inlet (111) when an external force (197) that is applied on the inner body (104, 204), by pressing of the suction valve (100, 200) towards the vessel (302), is larger than the force exerted by the spring (106, 206), to thereby set the suction valve (100, 200) in an intermediate state (P22) to allow liquid (391) to be sucked from the vessel (302), through the end suction inlet (112) and into the conduit (190); and **characterized in that**,
- in the intermediate state (P22), the inner body (104, 204) is in a third position along the longitudinal axis (108), in which third position the end sealing surface (110) is retracted from the end suction inlet (112) and the lateral sealing surface (116) seals the lateral suction inlet (114).

2. The suction valve (100, 200) of claim 1, wherein
- in the open state (P21), the inner body (104, 204) is in a second position along the longitudinal axis (108), in which second position the end sealing surface (110) is retracted from the end suction inlet (112) and the lateral sealing surface (116) is retracted from the lateral suction inlet (114).

3. The suction valve (100, 200) of any of claims 1 or 2, wherein
- the inner body (104, 204) comprises a lateral inlet (120, 220), and
- when the suction valve (100, 200) is set in the open state (P21), a circumferential channel (122) leading to the lateral inlet (120) of the inner body (104, 204) is formed between the outer body (102, 202) and the inner body (104, 204), the circumferential channel (122) thereby allowing liquid (191) to flow through the lateral inlet (120) of the inner body (104, 204) and into the conduit (190).

4. The suction valve (100, 200) of any of claims 1 to 3, wherein the inner body (104, 204) comprises a protrusion (124) that protrudes, when the suction valve (100, 200) is in the closed state (P1), beyond the end suction inlet (112) of the outer body (102, 202).

5. The suction valve of claim 4, wherein the protrusion (124) is arranged on the end sealing surface (110), the end sealing surface (110, 210) being supported by legs (126) that protrudes from a cylindrically shaped section (128) of the inner body (104, 204), such that the liquid passage (118) of the inner body (104, 204) is formed by spacings (129) between the legs (126).

6. The suction valve (100, 200) of any of claims 1 to 5, wherein
- the outer body (102, 202) comprises a first part (130, 230) and a second part (132, 232) that are attached to each other to hold the inner body (104, 204),
- the second part (132, 232) comprises a first spring abutment surface (134) that faces the inner body (104, 204),
- the inner body (104, 204) comprises a second spring abutment surface (136) that faces the second part (132, 232),
- the spring (106, 206) is in contact with and biased between the first and the second spring abutment surfaces (134, 136),
- the first part (130, 230) comprises a first stop surface (138) against which the inner body (104, 204) abut when the suction valve (100, 200) is in the closed state (P1),
- the second part (132, 232) comprises a second stop surface (140) against which the inner body (104, 204) abut when the suction valve (100, 200) is in the open state (P21).

7. A suction system (300) for sucking liquid (391) from a vessel (302), the suction system comprising
- a suction valve (100, 200) according to any of claims 1 to 5,
- a conduit (306) to which the suction valve (100, 200) is attached, and
- a suction device (308) connected to the conduit (190, 290) to provide a suction force for sucking liquid (391) from the vessel (302).

## Patentansprüche

1. Saugventil (100, 200), das konfiguriert ist, um an einer Leitung (190) befestigt zu sein, die angeordnet ist, um eine Saugkraft zum Ansaugen von Flüssigkeit (391) aus einem Behälter (302) bereitzustellen, wobei das Saugventil (100, 200) Folgendes umfasst:
- einen äußeren Körper (102, 202), der einen Saugeinlass (111) umfasst und konfiguriert ist, um mit der Leitung (190) verbunden zu sein, und
- einen inneren Körper (104, 204), der innerhalb des äußeren Körpers (102, 202) bewegbar angeordnet ist, wobei
- der äußere Körper (102, 202) und der innere Körper (104, 204) konzentrisch zueinander um eine Längsachse (108) angeordnet sind,
- der innere Körper so angeordnet ist, dass er sich in den Richtungen (-Y, Y) entlang der Längsachse (108) bewegt,
- eine Feder (106, 206), die angeordnet ist, um eine Kraft auf den inneren Körper (104, 204) auszuüben, um den inneren Körper (104, 204) in einer Richtung (-Y) zum Saugeinlass (111) hin zu drücken, sodass der innere Körper (104, 204) den Saugeinlass (111) abdichtet, um dadurch das Saugventil (100, 200) in einen geschlossenen Zustand (P1) zu versetzen,
- wobei der innere Körper (104, 204) angeordnet ist, um sich in einer Richtung (Y) vom Saugeinlass (111) weg zu bewegen, wenn eine durch die Leitung (190) angelegte Saugkraft (195) größer als die durch die Feder (106) ausgeübte Kraft ist, um dadurch das Saugventil (100, 200) in einen offenen Zustand (P21) zu versetzen, um zu ermöglichen, dass Flüssigkeit (391) aus dem Behälter (302) durch den Saugeinlass (111) und in die Leitung (190) gesaugt wird,
- wobei der Saugeinlass (111) des äußeren Körpers (102, 202) einen endseitigen Saugeinlass (112) und einen seitlichen Saugeinlass (114) umfasst,
- wobei der innere Körper (104, 204) eine endseitige Dichtfläche (110), eine seitliche Dichtfläche (116) und einen Flüssigkeitskanal (118) umfasst, um zu ermöglichen, dass Flüssigkeit durch den inneren Körper (104, 204) fließt,
- wobei sich im geschlossenen Zustand (P1) der innere Körper (104, 204) in einer ersten Position entlang der Längsachse (108) befindet, wobei in der ersten Position die endseitige Dichtfläche (110) den endseitigen Saugeinlass (112) abdichtet, während die seitliche Dichtfläche (116) den seitlichen Saugeinlass (114) abdichtet,
- wobei der innere Körper (104, 204) angeordnet ist, um sich in einer Richtung (Y) vom endseitigen Saugeinlass (111) weg zu bewegen, wenn eine äußere Kraft (197), die durch Drücken des Saugventils (100, 200) in Richtung des Behälters (302) auf den inneren Körper (104, 204) ausgeübt wird, größer als die durch die Feder (106, 206) ausgeübte Kraft ist, um dadurch das Saugventil (100, 200) in einen Zwischenzustand (P22) zu versetzen, um zu ermöglichen, dass Flüssigkeit (391) aus dem Behälter (302), durch den endseitigen Saugeinlass (112) und in die Leitung (190) gesaugt wird; und **dadurch gekennzeichnet, dass**
- sich im Zwischenzustand (P22) der innere Körper (104, 204) in einer dritten Position entlang der Längsachse (108) befindet, wobei in der dritten Position die endseitige Dichtfläche (110) vom endseitigen Saugeinlass (112) zurückgezogen ist und die seitliche Dichtfläche (116) den seitlichen Saugeinlass (114) abdichtet.

2. Saugventil (100, 200) nach Anspruch 1, wobei
- sich im offenen Zustand (P21) der innere Körper (104, 204) in einer zweiten Position entlang der Längsachse (108) befindet, wobei in der zweiten Position die endseitige Dichtfläche (110) vom endseitigen Saugeinlass (112) zurückgezogen ist und die seitliche Dichtfläche (116) vom seitlichen Saugeinlass (114) zurückgezogen ist.

3. Saugventil (100, 200) nach einem der Ansprüche 1 oder 2, wobei
- der innere Körper (104, 204) einen seitlichen Einlass (120, 220) umfasst und,
- wenn das Saugventil (100, 200) in den offenen Zustand (P21) versetzt ist, zwischen dem äußeren Körper (102, 202) und dem inneren Körper (104, 204) ein Umfangskanal (122) ausgebildet ist, der zum seitlichen Einlass (120) des inneren Körpers (104, 204) führt, wobei der Umfangskanal (122) dadurch ermöglicht, dass Flüssigkeit (191) durch den seitlichen Einlass (120) des inneren Körpers (104, 204) und in die Leitung (190) fließt.

4. Saugventil (100, 200) nach einem der Ansprüche 1 bis 3, wobei der innere Körper (104, 204) einen Vorsprung (124) umfasst, der über den endseitigen Saugeinlass (112) des äußeren Körpers (102, 202) hinausragt, wenn sich das Saugventil (100, 200) im geschlossenen Zustand (P1) befindet.

5. Saugventil nach Anspruch 4, wobei der Vorsprung (124) an der endseitigen Dichtfläche (110) angeordnet ist, wobei die endseitige Dichtfläche (110, 210) durch Schenkel (126) getragen wird, die von einem zylindrisch geformten Abschnitt (128) des inneren Körpers (104, 204) hervorragen, sodass der Flüssigkeitskanal (118) des inneren Körpers (104, 204) durch Abstände (129) zwischen den Schenkeln (126) ausgebildet ist.

6. Saugventil (100, 200) nach einem der Ansprüche 1 bis 5, wobei
- der äußere Körper (102, 202) einen ersten Teil (130, 230) und einen zweiten Teil (132, 232) umfasst, die aneinander befestigt sind, um den inneren Körper (104, 204) zu halten,
- der zweite Teil (132, 232) eine erste Federwiderlagerfläche (134) umfasst, die dem inneren Körper (104, 204) zugewandt ist,
- der innere Körper (104, 204) eine zweite Federwiderlagerfläche (136) umfasst, die dem zweiten Teil (132, 232) zugewandt ist,
- die Feder (106, 206) mit der ersten und der zweiten Federwiderlagerflächen (134, 136) in Kontakt steht und zwischen diesen vorgespannt ist,
- der erste Teil (130, 230) eine erste Anschlagfläche (138) umfasst, an der der innere Körper (104, 204) anliegt, wenn sich das Saugventil (100, 200) im geschlossenen Zustand (P1) befindet,
- der zweite Teil (132, 232) eine zweite Anschlagfläche (140) umfasst, an der der innere Körper (104, 204) anliegt, wenn sich das Saugventil (100, 200) im offenen Zustand (P21) befindet.

7. Saugsystem (300) zum Ansaugen von Flüssigkeit (391) aus einem Behälter (302), wobei das Saugsystem Folgendes umfasst:
- ein Saugventil (100, 200) nach einem der Ansprüche 1 bis 5,
- eine Leitung (306), an der das Saugventil (100, 200) befestigt ist, und
- eine Saugvorrichtung (308), die mit der Leitung (190, 290) verbunden ist, um eine Saugkraft zum Ansaugen von Flüssigkeit (391) aus dem Behälter (302) bereitzustellen.

## Revendications

1. Soupape d'aspiration (100, 200) conçue pour être fixée à un conduit (190) qui est agencé pour produire une force d'aspiration pour aspirer un liquide (391) d'une cuve (302), la soupape d'aspiration (100, 200) comprenant
un corps externe (102, 202) comprenant une entrée d'aspiration (111) et conçu pour être raccordé au conduit (190), et
un corps interne (104, 204) disposé de façon mobile dans le corps externe (102, 202), dans laquelle
le corps externe (102, 202) et le corps interne (104, 204) sont disposés de façon concentrique l'un par rapport à l'autre autour d'un axe longitudinal (108),
le corps interne est agencé pour se déplacer dans les directions (-Y, Y) le long de l'axe longitudinal (108),
un ressort (106, 206) est agencé pour exercer une force sur le corps interne (104, 204) pour appuyer sur le corps interne (104, 204) dans une direction (-Y) vers l'entrée d'aspiration (111), afin que le corps interne (104, 204) scelle l'entrée d'aspiration (111) pour ainsi établir la soupape d'aspiration (100, 200) dans un état fermé (P1),
le corps interne (104, 204) est agencé pour se déplacer dans une direction (Y) s'éloignant de l'entrée d'aspiration (111) lorsqu'une force d'aspiration (195) appliquée par le conduit (190) est supérieure à la force exercée par le ressort (106), pour ainsi établir la soupape d'aspiration (100, 200) dans un état ouvert (P21) pour permettre au liquide (391) d'être aspiré depuis la cuve (302) par l'intermédiaire de l'entrée d'aspiration (111) et dans le conduit (190)
l'entrée d'aspiration (111) du corps externe (102, 202) comprend une entrée d'aspiration d'extrémité (112) et une entrée d'aspiration latérale (114),
le corps interne (104, 204) comprend une surface de scellement d'extrémité (110), une surface de scellement latérale (116) et un passage de liquide (118) permettant au liquide de s'écouler à travers le corps interne (104, 204),
dans l'état fermé (P1), le corps interne (104, 204) est dans une première position le long de l'axe longitudinal (108), première position dans laquelle la surface de scellement d'extrémité (110) scelle l'entrée d'aspiration d'extrémité (112) tandis que la surface de scellement latérale (116) scelle l'entrée d'aspiration latérale (114),
le corps interne (104, 204) est agencé pour se déplacer dans une direction (Y) s'éloignant de l'entrée d'aspiration (111) lorsqu'une force externe (197) qui est appliquée sur le corps interne (104, 204) par pression sur la soupape d'aspiration (100, 200) en direction de la cuve (302) est supérieure à la force exercée par le ressort (106, 206), pour ainsi établir la soupape d'aspiration (100, 200) dans un état intermédiaire (P22) permettant au liquide (391) d'être aspiré depuis la cuve (302), par l'intermédiaire de l'entrée d'aspiration d'extrémité (112) et dans le conduit (190) ; et **caractérisée en ce que**
dans l'état intermédiaire (P22), le corps interne (104, 204) est dans une troisième position le long de l'axe longitudinal (108), troisième position dans laquelle la surface de scellement d'extrémité (110) est rétractée de l'entrée d'aspiration d'extrémité (112) et la surface de scellement latérale (116) scelle l'entrée d'aspiration latérale (114).

2. Soupape d'aspiration (100, 200) selon la revendication 1, dans laquelle
dans l'état ouvert (P21), le corps interne (104, 204) est dans une deuxième position le long de l'axe longitudinal (108), deuxième position dans laquelle la surface de scellement d'extrémité (110) est rétractée de l'entrée d'aspiration d'extrémité (112) et la surface de scellement latérale (116) est rétractée de l'entrée d'aspiration latérale (114).

3. Soupape d'aspiration (100, 200) selon l'une quelconque des revendications 1 ou 2, dans laquelle
le corps interne (104, 204) comprend une entrée latérale (120, 220), et
lorsque la soupape d'aspiration (100, 200) est établie dans l'état ouvert (P21), un canal circonférentiel (122) menant à l'entrée latérale (120) du corps interne (104, 204) est formé entre le corps externe (102, 202) et le corps interne (104, 204), le canal circonférentiel (122) permettant ainsi au liquide (191) de s'écouler à travers l'entrée latérale (120) du corps interne (104, 204) et dans le conduit (190).

4. Soupape d'aspiration (100, 200) selon l'une quelconque des revendications 1 à 3, dans laquelle le corps interne (104, 204) comprend une protubérance (124) qui fait saillie, lorsque la soupape d'aspiration (100, 200) est dans l'état fermé (P1), au-delà de l'entrée d'aspiration d'extrémité (112) du corps externe (102, 202).

5. Soupape d'aspiration selon la revendication 4, dans laquelle la protubérance (124) est disposée sur la surface de scellement d'extrémité (110), la surface de scellement d'extrémité (110, 210) étant soutenue par des pattes (126) qui font saillie depuis une section de forme cylindrique (128) du corps interne (104, 204), afin que le passage de liquide (118) du corps interne (104, 204) soit formé par des espacements (129) entre les pattes (126) .

6. Soupape d'aspiration (100, 200) selon l'une quelconque des revendications 1 à 5, dans laquelle
le corps externe (102, 202) comprend une première partie (130, 230) et une seconde partie (132, 232) qui sont fixées l'une à l'autre pour retenir le corps interne (104, 204),
la seconde partie (132, 232) comprend une première surface de butée de ressort (134) qui fait face au corps interne (104, 204),
le corps interne (104, 204) comprend une seconde surface de butée de ressort (136) qui fait face à la seconde partie (132, 232),
le ressort (106, 206) est en contact avec et est polarisé entre les première et seconde surfaces de butée de ressort (134, 136),
la première partie (130, 230) comprend une première surface d'arrêt (138) contre laquelle le corps interne (104, 204) vient en butée lorsque la soupape d'aspiration (100, 200) est dans l'état fermé (P1),
la seconde partie (132, 232) comprend une seconde surface d'arrêt (140) contre laquelle le corps interne (104, 204) vient en butée lorsque la soupape d'aspiration (100, 200) est dans l'état ouvert (P21).

7. Système d'aspiration (300) destiné à aspirer un liquide (391) d'une cuve (302), le système d'aspiration comprenant
une soupape d'aspiration (100, 200) selon l'une quelconque des revendications 1 à 5,
un conduit (306) auquel la soupape d'aspiration (100, 200) est fixée, et
un dispositif d'aspiration (308) raccordé au conduit (190, 290) pour produire une force d'aspiration destinée à aspirer le liquide (391) depuis la cuve (302).
